# EUROPEAN PATENT SPECIFICATION

(11) **EP 3 671 906 B1**
(45) Date of publication and mention of the grant of the patent: **25.12.2024**
(21) Application number: 18862730.1
(22) Date of filing: 28.09.2018
(51) Int. Cl.: H01M 4/02, H01G 11/28, H01M 4/66, H01M 4/13, H01M 4/131, H01M 10/42

(54) **ELECTRODE AND ENERGY STORAGE DEVICE**
ELEKTRODE UND ENERGIESPEICHERELEMENT
ÉLECTRODE ET ÉLÉMENT DE STOCKAGE D'ÉNERGIE

(30) Priority: 29.09.2017 JP 2017191375
(43) Date of publication of application: 24.06.2020
(73) Proprietor: GS Yuasa International Ltd., Kyoto-shi, Kyoto 601-8520 (JP)
(72) Inventor: TSUJITA, Kohei, Kyoto-shi Kyoto 601-8520 (JP); OHSUGI, Yuta, Kyoto-shi Kyoto 601-8520 (JP); TANABE, Morito, Kyoto-shi Kyoto 601-8520 (JP); MUKAI, Hiroshi, Kyoto-shi Kyoto 601-8520 (JP); WATARU, Yukihiro, Kyoto-shi Kyoto 601-8520 (JP)
(74) Representative: Isarpatent
(86) International application number: PCT/JP2018/036558
(87) International publication number: WO 2019/066065

(56) References cited:
- EP-A1- 1 125 334
- EP-A1- 1 125 334
- EP-B1- 1 125 334
- WO-A1-2012/005301
- WO-A1-2013/073012
- WO-A1-2013/172257
- WO-A1-2016/093095
- WO-A1-2016/093095
- WO-A1-2018/168043
- WO-A1-99/67835
- JP-A- 2001 357 854
- JP-A- 2015 153 720
- JP-A- 2015 153 720
- US-A1- 2013 089 781
- US-A1- 2015 303 484
- US-A1- 2017 331 146
- US-A1- 2019 363 335

## Description

### TECHNICAL FIELD

The present invention relates to an electrode and an energy storage device.

### BACKGROUND ART

Secondary batteries typified by lithium ion secondary batteries are widely used for electronic devices such as personal computers and communication terminals, automobiles and the like because these secondary batteries have a high energy density. In such energy storage devices such as secondary batteries and capacitors, abnormalities such as heat generation and ignition may occur due to, for example, use not usually foreseen. For example, a short circuit may occur between electrodes due to an impact such as a drop or a foreign substance mixed during manufacturing, and as a result, heat may be excessively generated.

Conventionally, as a technique of securing safety of a battery by reliably shutting off a charging current even when a battery temperature rises rapidly due to an overcharged state, a lithium ion secondary battery is disclosed in which a conductive layer formed on a positive electrode current collector contains a substance (lithium carbonate) decomposed at a high potential in an overcharged state, when overpotential results in a high potential (e.g., 4.5 to 5.5 V), the substance decomposed at a high potential is decomposed to generate a gas, and internal resistance of the battery increases so that the charging current can be shut off (see Patent Document 1). Patent document WO 2016/093095 discloses an electrode with an intermediate layer with current interruption capability.

### PRIOR ART DOCUMENT

### PATENT DOCUMENT

Patent Document 1: JP-A-2000-77061

### SUMMARY OF THE INVENTION

### PROBLEMS TO BE SOLVED BY THE INVENTION

However, in order for such a conductive layer to have high resistance, the battery needs to be at a high voltage in the overcharged state, and when the battery is not in the overcharged state, a heat generation suppressing effect at the time of a short circuit is not sufficient.

The present invention has been made in view of the above circumstances, and an object of the present invention is to provide an electrode whose safety is high because an increase in a short-circuit current is suppressed when a short circuit occurs between electrodes and an energy storage device including the electrode.

### MEANS FOR SOLVING THE PROBLEMS

The present invention devised for solving the problem described above is an electrode for an energy storage device including a conductive substrate, an intermediate layer, and an active material layer in this order. In this electrode, the intermediate layer includes a conductive agent, polyolefin, and a binder, and the content of the polyolefin with respect to the content of the conductive agent in the intermediate layer is 2 times or more and 20 times or less by mass ratio. The conductive agent and the polyolefin in the intermediate layer have a particulate shape, and the particle size of the polyolefin is larger than the particle size of the conductive agent. The particle size means a value (D50) at which a volume-based cumulative distribution calculated in accordance with JIS-Z-8819-2 (2001) is 50%. The content of the binder in the intermediate layer is 5% by mass or more and 30% by mass or less.

Another aspect of the present invention devised for solving the problem described above is an energy storage device including the electrode.

### ADVANTAGES OF THE INVENTION

The present invention can provide an electrode whose safety is high because an increase in a short-circuit current is suppressed when a short circuit occurs between electrodes and an energy storage device including the electrode.

### BRIEF DESCRIPTION OF THE DRAWINGS

Fig. 1 is an external perspective view showing a nonaqueous electrolyte secondary battery according to one embodiment of the present invention.
Fig. 2 is a schematic diagram showing an energy storage apparatus including a plurality of the nonaqueous electrolyte secondary batteries according to an embodiment of the present invention.
Fig. 3 is a graph showing a change in resistance due to heating in Example.
Fig. 4 is a graph showing results of a heating test in Example.
Fig. 5 is a graph showing results of a nail penetration test in Example.

### MODE FOR CARRYING OUT THE INVENTION

An electrode according to the present invention is an electrode for an energy storage device including a conductive substrate, an intermediate layer, and an active material layer in this order. In this electrode, the intermediate layer includes a conductive agent, polyolefin, and a binder, and the content of the polyolefin with respect to the content of the conductive agent in the intermediate layer is 2 times or more and 20 times or less by mass ratio.

According to the electrode, high safety can be provided by suppressing an increase in a short-circuit current when a short circuit occurs between electrodes. The reason why such an effect occurs is not clear, but is considered as follows. In the electrode, when the electrode excessively generates heat due to a short circuit, polyolefin in the intermediate layer softens and can cover the conductive agent. Thus, an electron conduction path between the conductive agents in the intermediate layer is separated, and an electron conduction path between the substrate and the active material layer is separated, so that electrical resistance between the substrate and the active material layer increases. In particular, since the content of the polyolefin in the intermediate layer is twice or more by mass ratio with respect to the content of the conductive agent, the conductive agent is covered with polyolefin in an amount sufficient to cause the above-described separation, so that electrical resistance can be effectively increased. As described above, in the electrode, a current shutdown function operates in accordance with excessive heat generation due to a short circuit or the like, and the increase in a short-circuit current can be suppressed, so that high safety can be provided.

The intermediate layer preferably further contains a carbonate compound, a hydrogen carbonate compound, a hydroxide (excluding an alkali metal hydroxide), another inorganic compound, or a combination thereof. When the intermediate layer further contains these components, the shutdown function at the time of excessive heat generation can be enhanced, and the safety can be further improved.

The intermediate layer preferably has an average thickness of 0.5 pm or more and 10 pm or less. With the average thickness of the intermediate layer falling within the above range, the shutdown function can be further enhanced, and, at the same time, a thickness of a positive electrode can be reduced.

The content of the polyolefin in the intermediate layer is preferably 30% by mass or more and 90% by mass or less. By setting the content of the polyolefin within the above range, it is possible to sufficiently increase the resistance at the time of excessive heat generation while securing sufficient conductivity at normal times.

The content of the conductive agent in the intermediate layer is preferably 2% by mass or more and 15% by mass or less. With the content of the conductive agent falling within the above range, while sufficient conductivity is secured during normal operation, an electron conduction path between the conductive agents is sufficiently separated during excessive heat generation, and resistance can be increased effectively. When the upper limit of the content of the conductive agent is in the above range, the magnitude of the short-circuit current is suppressed, so that the safety can be further improved.

A melting point of the polyolefin is preferably 140°C or higher. With the melting point of the polyolefin falling within the above range, while sufficient conductivity is secured during normal operation, an electron conduction path between the conductive agents is sufficiently separated during excessive heat generation, and resistance can be increased effectively. At the time of drying in a production process, the polyolefin is not softened, and shape retention is maintained, so that production can be performed efficiently.

According to the invention, the polyolefin has a particulate shape. When the polyolefin has a particulate shape, while sufficient conductivity is secured during normal operation, the polyolefin can cover the conductive agent by being softened during excessive heat generation due to a short circuit, so that resistance can be increased effectively.

The electrode is preferably a positive electrode. Providing the intermediate layer in the positive electrode with lower conductivity than the negative electrode can provide a higher blocking effect on short circuit currents when a short circuit occurs between the electrodes than providing the intermediate layer in the negative electrode including an active material layer with higher conductivity than the positive electrode active material layer and using a copper foil with high conductivity as a substrate.

An energy storage device according to one embodiment of the present invention is an energy storage device including the electrode. Since the energy storage device includes the electrode, the safety can be improved by suppressing an increase in a short-circuit current when a short circuit occurs between electrodes.

Hereinafter, a positive electrode as one embodiment of the electrode of the present invention, and a nonaqueous electrolyte secondary battery (hereinafter, may be simply referred to as "secondary battery") as one embodiment of the energy storage device of the present invention will be described in detail.

### <Positive Electrode (Electrode)>

The positive electrode according to one embodiment of the present invention includes a positive electrode substrate, an intermediate layer, and a positive electrode active material layer in this order. The positive electrode substrate is an example of a substrate, and the positive electrode active material layer is an example of an active material layer. The intermediate layer and the positive electrode active material layer may be stacked only on one side of the positive electrode substrate, or may be stacked on both sides. In the present embodiment, the positive electrode is used as a positive electrode of an energy storage device. When the electrode is a positive electrode, an influence of a decrease in conductivity during normal operation, which may occur by providing the intermediate layer, hardly occurs. Thus, it is possible to sufficiently increase resistance during excessive heat generation while securing sufficient conductivity during normal operation.

### [Positive electrode substrate]

The positive electrode substrate is a substrate having conductivity. As the material of the positive electrode substrate, a metal such as aluminum, titanium, tantalum, or stainless steel, or an alloy thereof is used. Among these materials, aluminum and an aluminum alloy are preferred for the balance among the potential resistance, conductivity level, and cost. Exemplified as a form of the positive electrode substrate are a foil and a deposited film, and a foil is preferred in terms of costs. That is, an aluminum foil is preferred as the positive electrode substrate. Examples of aluminum and the aluminum alloy include A1085P and A3003P specified in JIS-H-4000 (2014).

### [Intermediate layer]

The intermediate layer is disposed between the positive electrode substrate and the positive electrode active material layer and covers at least a portion of the surface of the positive electrode substrate. The intermediate layer includes a conductive agent, polyolefin, and a binder. Generally, the intermediate layer is a layer having a function of reducing contact resistance between the positive electrode substrate and the positive electrode active material layer, and in addition to the above-described functions, the intermediate layer of the present embodiment has a function of shutting off a current during excessive heat generation.

### (Conductive agent)

The conductive agent contained in the intermediate layer is not particularly limited as long as it has conductivity. Examples of the conducting agent include carbon blacks such as furnace black, acetylene black, and ketjen black, natural or artificial graphite, metal, and conductive ceramic. Among these conductive agents, carbon black is preferred. The shape of the conductive agent is particulate. Having "conductivity" means having a volume resistivity of 10⁷ Ω cm or less that is measured in accordance with JIS-H-0505 (1975).

A particle size of the conductive agent is preferably, for example, 20 nm or more and 1 pm or less. By using the conductive agent having such a particle size, an electron conduction path between the conductive agents is likely to be separated due to softening of polyolefin, and a shutdown function can be further enhanced. The particle size means a value (D50) at which a volume-based cumulative distribution calculated in accordance with JIS-Z-8819-2 (2001) is 50%.

The lower limit of the content of the conductive agent in the intermediate layer may be, for example, 1% by mass, preferably 2% by mass, and more preferably 5% by mass. When the content of the conductive agent in the intermediate layer is equal to or more than the lower limit, sufficient conductivity can be exhibited during normal use. The upper limit of the content of the conductive agent in the intermediate layer may be, for example, 20% by mass, preferably 15% by mass, and more preferably 10% by mass. When the upper limit of the content of the conductive agent in the intermediate layer is in the above range, the electron conduction path between the conductive agents is effectively separated with softening of polyolefin, and a more excellent shutdown function can be exhibited. When the content of the conductive agent in the intermediate layer is 15% by mass or less, the magnitude of the short-circuit current is suppressed, so that the safety can be further improved.

### (Polyolefin)

Polyolefin is a polymer synthesized using an olefin, which is an unsaturated hydrocarbon compound, as a monomer. The polyolefin is typically insulating.

Examples of the polyolefin include low-density polyethylene, high-density polyethylene, and polypropylene. Among these polyolefins, polypropylene is preferred from the viewpoint of a relatively high melting point. Polyolefin can be used alone or in combination of two or more.

The lower limit of the melting point of the polyolefin may be 100°C, preferably 140°C, and more preferably 160°C. With the melting point of the polyolefin falling within the above range, while sufficient conductivity is secured during normal operation, an electron conduction path between the conductive agents is sufficiently separated during excessive heat generation, and resistance can be increased effectively. At the time of drying in a production process, the polyolefin is not softened, and shape retention is maintained, so that production can be performed efficiently.

The polyolefin has a particulate shape in the intermediate layer during normal use. With the melting point of the polyolefin falling within the above range, while sufficient conductivity is secured during normal operation, the polyolefin can cover the conductive agent by being softened during excessive heat generation due to a short circuit, so that resistance can be increased effectively. The particulate shape may include a shape in which part of particles may be melted and bound as long as the particle shape is maintained.

The particle size of the polyolefin is larger than the particle size of the conductive agent. By using polyolefin having such a particle size, the polyolefin exists in a state of being higher than the conductive agent in the thickness direction of the intermediate layer. Thus, since polyolefin softened during excessive heat generation due to a short circuit can cover the conductive agent, resistance can be increased effectively, and an effect of suppressing an increase in a short-circuit current can be improved. A particle size of polyolefin is preferably, for example, 1 pm or more and 10 pm or less. The particle size means a value (D50) at which a volume-based cumulative distribution calculated in accordance with JIS-Z-8819-2 (2001) is 50%.

The lower limit of the content of the polyolefin with respect to the content of the conductive agent in the intermediate layer is twice by mass ratio, preferably four times, and more preferably six times. When the content of the polyolefin with respect to the conductive agent is equal to or more than the lower limit, the conductive agent is covered with the polyolefin in an amount sufficient to cause the above-described separation, so that electrical resistance can be effectively increased, and a sufficient shutdown function is exhibited. The upper limit of the content of the polyolefin with respect to the content of the conductive agent in the intermediate layer is 20 times by mass ratio, preferably 16 times, and more preferably 12 times. When the content of the polyolefin with respect to the conductive agent is equal to or less than the upper limit, a sufficient amount of the conductive agent can be present in the intermediate layer, and good conductivity during normal operation can be secured.

The lower limit of the content of the polyolefin in the intermediate layer is, for example, preferably 30% by mass, more preferably 50% by mass, and still more preferably 60% by mass. When the content of the polyolefin in the intermediate layer is equal to or more than the lower limit, since the conductive agent is covered with the polyolefin in an amount sufficient to cause the above-described separation, the electron conduction path between the conductive agents or the electron conduction path between the positive electrode substrate and the positive electrode active material layer is effectively separated, and a more excellent shutdown function can be exhibited. The upper limit of the content of the polyolefin in the intermediate layer is, for example, preferably 90% by mass, and more preferably 85% by mass. When the content of the polyolefin in the intermediate layer is equal to or less than the upper limit, good conductivity during normal use and a good shutdown function during excessive heat generation can be exhibited in a well-balanced manner.

### (Binder)

Examples of the binder (binding agent) include thermoplastic resins such as fluororesins (polytetrafluoroethylene (PTFE), polyvinylidene fluoride (PVDF) and the like), polyethylene, polypropylene and polyimide; elastomers such as ethylene-propylene-diene rubber (EPDM), sulfonated EPDM, styrene butadiene rubber (SBR) and fluorine rubber; and polysaccharide polymers. Among these binders, a fluororesin is preferred, and PVDF is more preferred. A fluororesin containing fluorine having a small intermolecular force and a low surface energy swells with heat generation and has an appropriate binding property as a binder. As a result, by using the fluororesin, the electron conduction path between the conductive agents or the electron conduction path between the positive electrode substrate and the positive electrode active material layer is relatively easily separated when polyolefin is softened during heat generation, and the shutdown function can be more effectively exhibited.

The lower limit of the content of the binder in the intermediate layer is 5% by mass, and more preferably 10% by mass. The upper limit of the content is 30% by mass, and more preferably 20% by mass. With the content of the binder in the intermediate layer falling within the above range, a sufficient binding property and separability of the electron conduction path between the conductive agents or the electron conduction path between the positive electrode substrate and the positive electrode active material layer during excessive heat generation can be exhibited in a well-balanced manner.

### (Other components)

The intermediate layer may further contain components other than the conductive agent, the polyolefin, and the binder from the viewpoint of improving the effect of suppressing the increase in a short-circuit current. However, the upper limit of the content of the other components in the intermediate layer is preferably, for example, 20% by mass. The upper limit may be 10% by mass, 5% by mass, or 1% by mass. When the content of other compounds is equal to or less than the upper limit, both good conductivity during normal use and the shutdown function at the time of an abnormality can be more favorably achieved.

Examples of the other components include a carbonate compound, a hydrogen carbonate compound, a hydroxide (excluding an alkali metal hydroxide), another inorganic compound, and a combination thereof. When the intermediate layer further contains such other components, the shutdown function at the time of excessive heat generation can be enhanced, and the safety can be further improved.

Examples of the carbonate compound include carbonates of alkaline earth metals such as magnesium carbonate and calcium carbonate, and other examples include aluminum carbonate. Among these carbonate compounds, carbonates of alkaline earth metals are preferred, and magnesium carbonate is more preferred. When such a carbonate compound is used, the shutdown function at the time of excessive heat generation can be enhanced, and the safety can be further improved.

Examples of the hydrogen carbonate compound include alkali metal hydrogen carbonate such as sodium hydrogen carbonate and potassium hydrogen carbonate, and alkaline earth metal hydrogen carbonate such as calcium hydrogen carbonate.

Examples of the hydroxide include hydroxides of alkaline earth metals such as magnesium hydroxide and calcium hydroxide, and aluminum hydroxide (excluding an alkali metal hydroxide) By using such a hydroxide, a current shutdown function operates in accordance with heat generation due to a short circuit or the like, and further heat generation can be suppressed, so that the safety can be further improved.

Examples of other inorganic compounds include inorganic oxides such as alumina, titanium oxide, magnesium oxide, silicon oxide, aluminum oxide-silicon oxide composite oxides; titanate compounds such as barium titanate; and nitrides such as aluminum nitride and silicon nitride. By using the inorganic compound, the shape of the intermediate layer can be maintained even when a polyolefin resin is softened, so that direct contact between the positive electrode substrate and the positive electrode active material layer can be prevented.

An average thickness of the intermediate layer is not particularly limited, but the lower limit is preferably 0.5 pm, more preferably 1 pm, and still more preferably 2 pm. The upper limit of the average thickness is preferably 10 pm, and more preferably 6 pm. When the average thickness of the intermediate layer is equal to or more than the lower limit, the shutdown function can be further enhanced. When the average thickness of the intermediate layer is equal to or less than the upper limit, the thickness of the positive electrode can be reduced. The average thickness of the intermediate layer refers to a value obtained by measuring and averaging the thickness of the intermediate layer at five or more points in a cross-sectional scanning electron microscope (SEM) of an electrode including a conductive substrate, the intermediate layer, and an active material layer. The cross-sectional SEM is a method of preparing a cut surface of a sample and observing the cross section with a scanning electron microscope.

### (Positive active material layer)

The positive electrode active material layer is formed from a so-called positive composite containing a positive active material. The positive composite that forms the positive electrode active material layer contains optional components such as a conductive agent, a binder, a thickener and a filler as necessary.

Examples of the positive electrode active material include composite oxides represented by LiₓMO_{y} (M represents at least one transition metal) (LiₓCoO₂, LiₓNiO₂, LiₓMnO₃, LiₓNi_{α}Co_{(1-α)}O₂, LiₓNi_{α}Mn_{β}Co_{(1-α-β)}O₂ and the like each having a layered α-NaFeO₂ crystal structure, and LiₓMn₂O₄, LiₓNi_{α}Mn_{(2-α)}O₄ and the like each having a spinel-type crystal structure), and polyanion compounds represented by Li_{w}Meₓ(XO_{y})_{z} (Me represents at least one transition metal, and X represents, for example, P, Si, B, V or the like) (LiFePO₄, LiMnPO₄, LiNiPO₄, LiCoPO₄, Li₃V₂(PO₄)₃, Li₂MnSiO₄, Li₂CoPO₄F and the like). Elements or polyanions in these compounds may be partially substituted with other elements or anionic species. In the positive electrode active material layer, one of these compounds may be used singly, or two or more of these compounds may be mixed and used.

The conductive agent and the binder contained in the positive electrode active material layer may be the same as those in the intermediate layer.

Examples of the thickener include polysaccharide polymers such as carboxymethylcellulose (CMC) and methylcellulose. When the thickener has a functional group reactive with lithium, it is preferable to deactivate the functional group by methylation or the like in advance.

The filler is not particularly limited. Examples of the main component of the filler include polyolefins such as polypropylene and polyethylene, silica, alumina, zeolite and glass.

When the electrode is a positive electrode, the provision of the intermediate layer hardly affects the conductivity during normal operation. Thus, it is possible to effectively increase resistance during heat generation while securing sufficient conductivity during normal operation.

### (Production method)

A method of producing the positive electrode is not particularly limited. For example, the positive electrode can be obtained by sequentially applying a paste for forming an intermediate layer and a paste for forming a positive electrode active material layer onto a positive electrode substrate and drying the pastes.

### <Secondary Battery (Nonaqueous Electrolyte Energy Storage Device)>

The secondary battery according to one embodiment of the present invention has a positive electrode as the electrode, a negative electrode, and a nonaqueous electrolyte. The positive electrode and the negative electrode usually form an electrode body stacked or wound with a separator interposed therebetween. The electrode assembly is housed in a case, and the case is filled with the nonaqueous electrolyte. The nonaqueous electrolyte is interposed between the positive electrode and the negative electrode. As the case, a known metal case, a resin case or the like, which is usually used as a case of a secondary battery, can be used.

### (Positive electrode)

The positive electrode provided in the secondary battery has a positive electrode substrate and a positive electrode active material layer disposed directly or via an intermediate layer on the positive electrode substrate. The positive electrode included in the secondary battery is preferably the positive electrode according to one embodiment of the present invention described above.

### (Negative electrode)

The negative electrode has a negative electrode substrate and a negative electrode active material layer disposed directly or via an intermediate layer on the negative electrode substrate. When the positive electrode is not the positive electrode according to one embodiment of the present invention described above, the electrode is the negative electrode according to one embodiment of the present invention including the negative electrode substrate, the intermediate layer, and the negative electrode active material layer in this order.

The negative electrode substrate may have the same configuration as that of the positive electrode substrate. As the material of the negative electrode substrate, metals such as copper, nickel, stainless steel, and nickel-plated steel or alloys thereof are used, and copper or a copper alloy is preferred. That is, a copper foil is preferred as the negative electrode substrate. Examples of the copper foil include rolled copper foils and electrolytic copper foils.

The configuration of the intermediate layer in the negative electrode is not particularly limited, and can be formed from, for example, a composition containing a binder and a conductive agent. The intermediate layer of the negative electrode may be formed with the same composition as the above-described intermediate layer of the positive electrode.

The negative electrode active material layer is formed from a so-called negative composite containing a negative active material. The negative composite that forms the negative electrode active material layer contains optional components such as a conductive agent, a binder, a thickener and a filler as necessary. As regards the optional component such as a conducting agent, a binding agent, a thickener, or a filler, it is possible to use the same component as in the positive electrode active material layer.

As the negative active material, a material capable of absorbing and releasing lithium ions is normally used. Specific examples of the negative electrode active material include metals or metalloids such as Si and Sn; metal oxides or metalloid oxides such as a Si oxide and a Sn oxide; a polyphosphoric acid compound; and carbon materials such as graphite and non-graphitic carbon (easily graphitizable carbon or hardly graphitizable carbon).

The negative composite (negative electrode active material layer) may also contain a typical nonmetal element such as B, N, P, F, Cl, Br, or I, a typical metal element such as Li, Na, Mg, Al, K, Ca, Zn, Ga, or Ge, or a transition metal element such as Sc, Ti, V, Cr, Mn, Fe, Co, Ni, Cu, Mo, Zr, Ta, Hf, Nb, or W.

### (Separator)

As a material of the separator, for example, a woven fabric, a nonwoven fabric, a porous resin film or the like is used. Among them, a porous resin film is preferred. As a main component of the porous resin film, for example, a polyolefin such as polyethylene or polypropylene is preferred from the viewpoint of strength. A porous resin film in which these resins are combined with a resin such as aramid or polyimide may be used.

### (Nonaqueous electrolyte)

As the nonaqueous electrolyte, a known electrolyte generally used for nonaqueous electrolyte secondary batteries can be used, and a nonaqueous solvent in which an electrolyte salt is dissolved can be used.

Examples of the nonaqueous solvents include cyclic carbonates such as ethylene carbonate (EC), propylene carbonate (PC), and butylene carbonate (BC), and open-chain carbonates such as diethyl carbonate (DEC), dimethyl carbonate (DMC), and ethyl methyl carbonate (EMC).

Examples of the electrolyte salt include lithium salts, sodium salts, potassium salts, magnesium salts and onium salts, with lithium salts being preferable. Examples of the lithium salt include inorganic lithium salts such as LiPF₆, LiPO₂F₂, LiBF₄, LiClO₄, and LiN(SO₂F)₂, and lithium salts having a fluorinated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₅)₃.

As the nonaqueous electrolyte, a salt that is melted at normal temperature (ionic liquid), a polymer solid electrolyte, or the like can also be used.

### (Production method)

A method of producing the secondary battery is not particularly limited. The method of producing the secondary battery includes, for example, a step of preparing a positive electrode, a step of preparing a negative electrode, a step of preparing a nonaqueous electrolyte, a step of forming an electrode assembly in which the positive electrode and the negative electrode are alternately superposed by stacking or winding the positive electrode and the negative electrode with a separator interposed between the electrodes, a step of housing the positive electrode and the negative electrode (electrode assembly) in a battery case, and a step of injecting the nonaqueous electrolyte into the battery case. A nonaqueous electrolyte secondary battery (nonaqueous electrolyte energy storage device) can be obtained by sealing an injection port after the injection. The details of each element constituting the nonaqueous electrolyte energy storage device (secondary battery) obtained by the production method are as described above.

### <Other Embodiments>

The present invention is not limited to the aforementioned embodiments, and, in addition to the aforementioned embodiments, can be carried out in various modes with alterations and/or improvements being made. For example, in the above embodiment, although the intermediate layer of the positive electrode contains polyolefin, the intermediate layer of the positive electrode may not contain the polyolefin, and the intermediate layer of the negative electrode may contain the polyolefin. Each of the intermediate layer of the positive electrode and the intermediate layer of the negative electrode may contain the polyolefin. When the intermediate layer of the positive electrode contains the polyolefin, the negative electrode may not have the intermediate layer. Conversely, when the intermediate layer of the negative electrode contains the polyolefin, the positive electrode may not have the intermediate layer. In the positive electrode or the negative electrode, a covering layer or the like that covers the active material layer may be provided.

In the present embodiment, the electrode is used as the positive electrode of the energy storage device. However, the electrode may be used as the negative electrode, or may be used as both the positive electrode and the negative electrode.

In the above embodiment, the embodiment in which the energy storage device is a nonaqueous electrolyte secondary battery has been described, but another energy storage device may be used. Examples of another energy storage device include capacitors (electric double layer capacitors and lithium ion capacitors) and secondary batteries in which an electrolyte contains water.

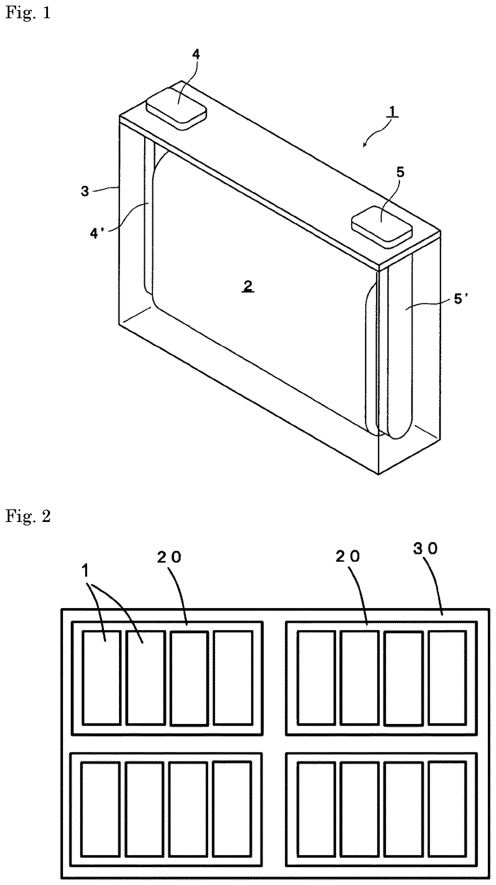

Fig. 1 is a schematic view of a rectangular nonaqueous electrolyte secondary battery 1 (secondary battery 1) as one embodiment of the energy storage device according to the present invention. Fig. 1 is a view showing the inside of a case in a perspective manner. In the secondary battery 1 shown in Fig. 1, an electrode assembly 2 is housed in a battery case 3. The electrode assembly 2 is formed by winding a positive electrode, including a positive electrode active material, and a negative electrode, including a negative electrode active material, with a separator interposed between the electrodes. The positive electrode is electrically connected to a positive electrode terminal 4 through a positive electrode lead 4', and the negative electrode is electrically connected to a negative electrode terminal 5 through a negative electrode lead 5'. A nonaqueous electrolyte is injected in the battery case 3. The specific configuration of each element such as the positive electrode is as described above.

The configuration of the energy storage device according to the present invention is not particularly limited, and examples include cylindrical batteries, prismatic batteries (rectangular batteries) and flat batteries. The present invention can also be implemented as an energy storage apparatus including a plurality of the nonaqueous electrolyte energy storage devices as described above. Fig. 2 shows one embodiment of an energy storage apparatus. In Fig. 2, an energy storage apparatus 30 includes a plurality of energy storage units 20. Each of the energy storage units 20 includes a plurality of the secondary batteries 1. The energy storage apparatus 30 can be mounted as a power source for an automobile such as an electric vehicle (EV), a hybrid vehicle (HEV), a plug-in hybrid vehicle (PHEV), or the like.

### EXAMPLES

Hereinafter, the present invention will be described further in detail by way of examples, but the present invention is not limited to the following examples.

### [Example 1]

### (Production of positive electrode)

An intermediate layer was formed on the surface of an aluminum foil (average thickness 15 µm) as a positive electrode substrate in the following manner. Acetylene black (AB), polypropylene, and polyvinylidene fluoride (PVDF) were weighed at a mass ratio of 8 : 77 : 15. These materials were mixed with N-methyl-2-pyrrolidone (NMP) as a dispersion medium to prepare a paste for forming an intermediate layer. The paste for forming an intermediate layer was applied to an aluminum foil. Thereafter, drying was performed to obtain an intermediate layer having an average thickness of 8 pm.

Li(Ni_{0.82}Co_{0.15}Al_{0.03})O₂ as a positive electrode active material, AB and PVDF were contained in a mass ratio of 95:3:2 (in terms of solid content), and a paste for forming a positive electrode active material in which N-methyl-2-pyrrolidone was used as a dispersion medium was prepared. The paste for forming a positive electrode active material was applied to the surface of the intermediate layer and dried to remove the dispersion medium. Thereafter, pressure molding was performed using a roller press machine to obtain a positive electrode of Example 1. The average thickness of the intermediate layer after the pressure molding was 4 µm. The positive electrode was provided with a tab on which the intermediate layer and the positive electrode active material layer were not stacked.

### [Example 2]

A positive electrode of Example 2 was obtained in the same manner as in Example 1, except that acetylene black (AB), polypropylene, alumina and polyvinylidene fluoride (PVDF) were weighed at a mass ratio of 8 : 38.5 : 38.5 : 15, and these materials were mixed with N-methyl-2-pyrrolidone (NMP) as a dispersion medium to prepare a paste for forming an intermediate layer.

### [Comparative Example 1]

A positive electrode of Comparative Example 1 was obtained in the same manner as in Example 1, except that the intermediate layer was not provided.

### [Comparative Example 2]

A positive electrode of Comparative Example 1 was obtained in the same manner as in Example 1, except that as materials for the intermediate layer, AB and PVDF were used in a mass ratio of 8 : 92, and polypropylene was not included.

### [Comparative Example 3]

A positive electrode of Comparative Example 3 was obtained in the same manner as in Example 1, except that as materials for the intermediate layer, AB, alumina, and PVDF were used in a mass ratio of 8 : 77 : 15, and polypropylene was not included.

### [Evaluation]

### (Change in resistance due to heating)

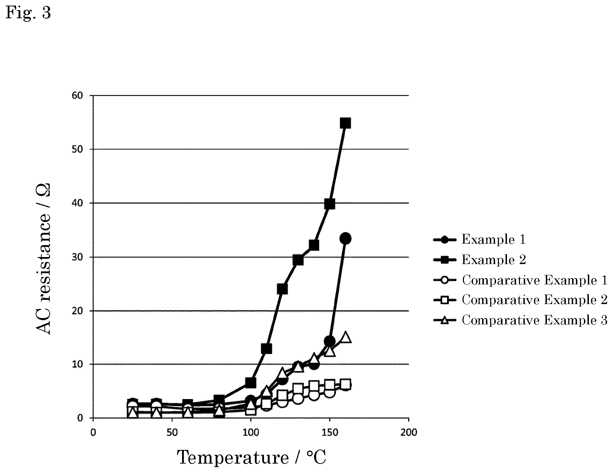

Each AC impedance (ACR) of the positive electrodes obtained in Example 1, Example 2, and Comparative Examples 1 to 3 was measured while increasing the temperature. Specifically, first, two positive electrodes of the same type were stacked with a separator interposed between the electrodes so that the positive electrode active materials faced each other, and the laminate was impregnated with an electrolyte containing 1 M of LiPF₆ and having an EC : EMC ratio of 20 : 80 (volume ratio). The ACR between the positive electrode substrates was measured for this laminate using an AC resistance meter while gradually increasing the temperature to 160°C by 5°C or 10°C. Fig. 3 shows the measurement results.

### (Heating test of nonaqueous electrolyte secondary battery)

An electrode assembly was produced by sandwiching a polyolefin porous resin film separator between each positive electrode of Example 1 and Comparative Example 1 and a negative electrode whose negative electrode active material was graphite. The electrode assembly was housed in a metal-resin composite film as an outer case so that a tab of each electrode was exposed, the electrolyte described above was injected, and the electrode assembly was then sealed. Thus, a nonaqueous electrolyte secondary battery was obtained.

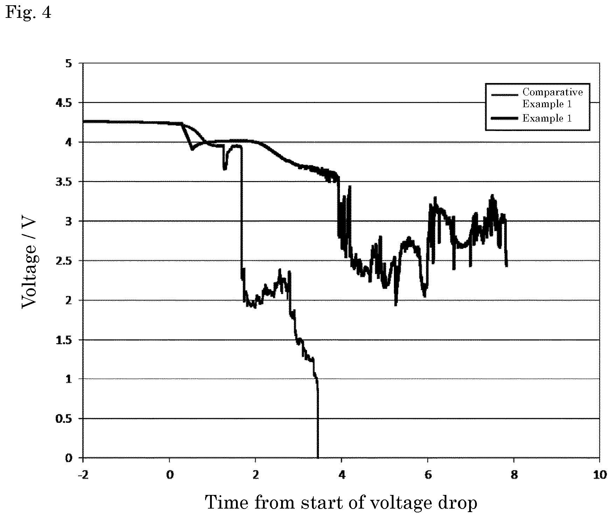

With respect to each of the obtained nonaqueous electrolyte secondary batteries, a charge termination condition was set until a charge current reached 1/100 C, and the battery was charged at a charge termination voltage of 4.35 V. Thereafter, with the nonaqueous electrolyte secondary battery fixed, the battery was heated by a heater, and a change in voltage was measured. The heating rate was 5°C/min. Fig. 4 is a graph in which the voltage of each nonaqueous electrolyte secondary battery is plotted with respect to time from the start of a voltage drop.

### (Nail penetration test)

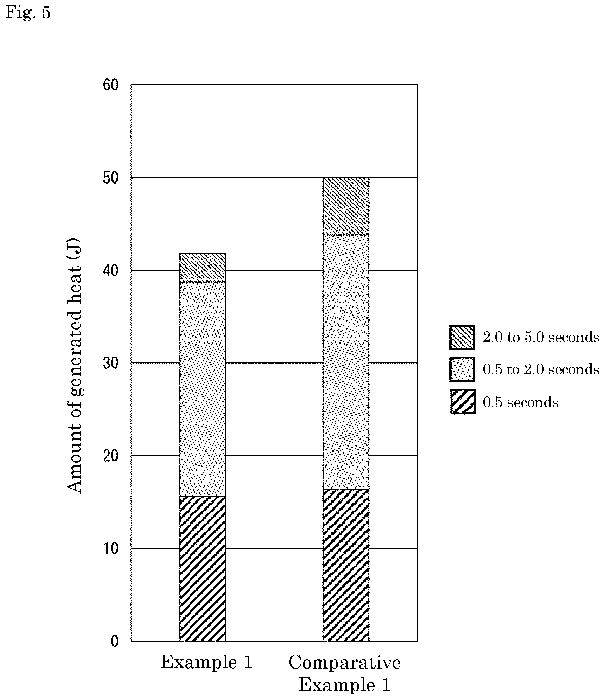

An electrode assembly was produced by sandwiching a polyolefin porous resin film separator between each positive electrode of Example 1 and Comparative Example 1 and a negative electrode whose negative electrode active material was graphite. The electrode assembly was housed in a metal-resin composite film as an outer case so that a tab of each electrode was exposed, and sealed. Thus, a dry cell was obtained. A nail penetration test was performed on the dry cell by applying a voltage of 4.35 V between the positive electrode and the negative electrode and allowing a nail to penetrate in an electrode stacking direction. An amount of heat generated in each range of 0 to 0.5 seconds, 0.5 to 2.0 seconds, and 2.0 to 5.0 seconds was analyzed based on a value of a change in a resistance value Rdz to 5 seconds after the nail was penetrated and a short circuit occurred. It is presumed that the heat that starts to be generated in 0 to 0.5 seconds is caused by a short circuit between the positive and negative electrodes through the nail, the heat that starts to be generated in 0.5 to 2.0 seconds is caused by a melting phenomenon of the separator, and the heat that starts to be generated in 2.0 to 5.0 seconds is caused by large-current discharge due to direct contact between the positive electrode and the negative electrode. Fig. 5 shows the analysis results.

As shown in Fig. 3, in the positive electrode of Example 1 in which the intermediate layer contains polypropylene and the positive electrode of Example 2 in which the intermediate layer contains polypropylene and alumina, it can be seen that electrical resistance greatly increases due to a temperature rise, and the positive electrodes have an excellent shutdown function against heat generation and high safety. The positive electrode of Example 2 in which the intermediate layer contained polypropylene and alumina had a particularly excellent shutdown function. Also in Comparative Examples 1 to 3, although a certain rise in resistance is observed, it can be seen that the shutdown function is inferior to Examples 1 and 2.

As shown in Fig. 4, a short circuit occurred with heating, and the voltage of the nonaqueous electrolyte secondary battery decreased. It can be seen that the nonaqueous electrolyte secondary battery using the positive electrode of Example 1 in which the intermediate layer contains polypropylene maintains a higher voltage as compared to Comparative Example 1 in which the intermediate layer is not provided. This means that when a short circuit occurs, a good shutdown function is exhibited. That is, it can be seen that the nonaqueous electrolyte secondary battery of Example 1 has higher safety than the nonaqueous electrolyte secondary battery of Comparative Example 1.

As shown in Fig. 5, in a dry cell using the positive electrode of Example 1 in which the intermediate layer contains polypropylene, it can be seen that heat generation after nail penetration is suppressed as compared to Comparative Example 1 in which the intermediate layer is not provided.

### INDUSTRIAL APPLICABILITY

The present invention can be applied to nonaqueous electrolyte secondary batteries to be used as power sources for electronic devices such as personal computers and communication terminals, automobiles and the like.

### DESCRIPTION OF REFERENCE SIGNS

- 1: Nonaqueous electrolyte secondary battery
- 2: Electrode assembly
- 3: Battery case
- 4: Positive electrode terminal
- 4': Positive electrode lead
- 5: Negative electrode terminal
- 5': Negative electrode lead
- 20: Energy storage unit
- 30: Energy storage apparatus

## Claims

1. An electrode for an energy storage device comprising a conductive substrate, an intermediate layer, and an active material layer in this order,
wherein the intermediate layer includes a conductive agent, polyolefin, and a binder, and
a content of the polyolefin with respect to a content of the conductive agent in the intermediate layer is 2 times or more and 20 times or less by mass ratio, **characterized in that** both said conductive agent and said polyolefin have a particulate shape, and the particle size of the polyolefin is larger than the particle size of the conductive agent, wherein the particle size means a value D50 at which a volume-based cumulative distribution calculated in accordance with JIS-Z-8819-2 (2001) is 50% and wherein the content of the binder in the intermediate layer is 5% by mass or more and 30% by mass or less.

2. The electrode according to claim 1, wherein the intermediate layer further contains a carbonate compound, a hydrogen carbonate compound, a hydroxide excluding an alkali metal hydroxide, another inorganic compound, or a combination thereof.

3. The electrode according to claim 1 or 2, wherein the intermediate layer has an average thickness of 0.5 µm or more and 10 µm or less.

4. The electrode according to claim 1, 2 or 3, wherein the content of the polyolefin in the intermediate layer is 30% by mass or more and 90% by mass or less.

5. The electrode according to any one of claims 1 to 4, wherein the content of the conductive agent in the intermediate layer is 2% by mass or more and 15% by mass or less.

6. The electrode according to any one of claims 1 to 5, wherein a melting point of the polyolefin is 140°C or higher.

7. The electrode according to any one of claims 1 to 6, which is a positive electrode.

8. An energy storage device comprising the electrode according to any one of claims 1 to 7.

## Patentansprüche

1. Elektrode für eine Energiespeichervorrichtung, umfassend ein leitfähiges Substrat, eine Zwischenschicht und eine Schicht aus aktivem Material in dieser Reihenfolge,
wobei die Zwischenschicht ein leitfähiges Mittel, Polyolefin und ein Bindemittel umfasst und
der Gehalt des Polyolefins im Verhältnis zum Gehalt des leitfähigen Mittels in der Zwischenschicht das 2-fache oder mehr und das 20-fache oder weniger in Massenverhältnis beträgt, **dadurch gekennzeichnet, dass** sowohl das leitfähige Mittel als auch das Polyolefin eine Partikelform aufweisen und die Partikelgröße des Polyolefins größer ist als die Partikelgröße des leitfähigen Mittels und wobei der Gehalt des Bindemittels in der Zwischenschicht 5 Massen-% oder mehr und 30 Massen-% oder weniger beträgt, wobei die Partikelgröße einen Wert (D50) bedeutet, bei dem eine gemäß JIS-Z-8819-2 (2001) berechnete volumenbasierte kumulative Verteilung 50 % beträgt.

2. Elektrode nach Anspruch 1, wobei die Zwischenschicht ferner eine Carbonatverbindung, eine Hydrogencarbonatverbindung, ein Hydroxid, ausgenommen ein Alkalimetallhydroxid, eine andere anorganische Verbindung oder eine Kombination davon enthält.

3. Elektrode nach Anspruch 1 oder 2, wobei die Zwischenschicht eine durchschnittliche Dicke von 0,5 µm oder mehr und 10 µm oder weniger aufweist.

4. Elektrode nach Anspruch 1, 2 oder 3, wobei der Gehalt des Polyolefins in der Zwischenschicht 30 Massen-% oder mehr und 90 Massen-% oder weniger beträgt.

5. Elektrode nach einem der Ansprüche 1 bis 4, wobei der Gehalt des leitfähigen Mittels in der Zwischenschicht 2 Massen-% oder mehr und 15 Massen-% oder weniger beträgt.

6. Elektrode nach einem der Ansprüche 1 bis 5, wobei der Schmelzpunkt des Polyolefins 140 °C oder höher ist.

7. Elektrode nach einem der Ansprüche 1 bis 6, die eine positive Elektrode ist.

8. Energiespeicher, der die Elektrode nach einem der Ansprüche 1 bis 7 umfasst.

## Revendications

1. Une électrode pour un dispositif de stockage d'énergie comprenant un substrat conducteur, une couche intermédiaire, et une couche de matériau actif dans cet ordre,
dans laquelle la couche intermédiaire comprend un agent conducteur, une polyoléfine, et un liant, et
la teneur de la polyoléfine par rapport à la teneur en agent conducteur dans la couche intermédiaire est de 2 fois ou plus ou 20 et moins en rapport massique,
**caractérisée en ce que** le dit agent conducteur et la dite polyoléfine ont tous deux une forme particulière, et la taille des particules de la polyoléfine est supérieure à la taille de particules de l'agent conducteur,
dans laquelle la taille des particules signifie une valeur D50 à laquelle une distribution cumulative basée sur le volume calculée en accord avec la norme JIS-Z-8819-2 (2001) est de 50%
et dans laquelle la teneur du liant dans la couche intermédiaire est de 5% en poids ou moins ou 30% en poids ou moins.

2. L'électrode selon la revendication 1, dans laquelle la couche intermédiaire contient également un composé carbonate, un composé hydrogénocarbonate, un hydroxyde excluant un hydroxyde de métal alcalin, un autre composé inorganique, ou une combinaison de ceux-ci.

3. L'électrode selon la revendication 1 ou 2, dans laquelle la couche intermédiaire a une épaisseur moyenne de 0.5 µm ou plus et de 10 µm ou moins.

4. L'électrode selon la revendication 1, 2, ou 3, dans laquelle la teneur en polyoléfine dans la couche intermédiaire est de 30% en poids ou plus et de 90% en poids ou moins.

5. L'électrode selon l'une des revendications 1 à 4, dans laquelle la teneur en agent conducteur dans la couche intermédiaire est de 2% en poids ou plus et de 15% en poids ou moins.

6. L'électrode selon l'une des revendications 1 à 5, dans laquelle le point de fusion de la polyoléfine est de 140°C ou plus.

7. L'électrode selon l'une des revendications 1 à 6, qui est une électrode positive.

8. Un dispositif de stockage d'énergie comprenant une électrode selon l'une des revendications 1 à 7.
